# EUROPEAN PATENT SPECIFICATION

(11) **EP 1 901 418 B1**
(45) Date of publication and mention of the grant of the patent: **20.03.2013**
(21) Application number: 06425630.8
(22) Date of filing: 13.09.2006
(51) Int. Cl.: H02K 21/24, H02K 9/19, F42B 19/24, H02K 1/27, H02K 5/20

(54) **An axial-flux electric motor provided with a high-efficiency cooling system**
Axialflussmotor mit Ständerkühlsystem
Moteur électrique à flux axial avec système de refroidissement du stator

(43) Date of publication of application: 19.03.2008
(73) Proprietor: Whitehead Sistemi Subacquei S.p.A., 57124 Livorno (LI) (IT)
(72) Inventor: Trillini, Lucia, 56043 Valtriano di fauglia (IT); Peselli, Mauro, 54033 Carrara (IT); Garzelli, Carlo, 57127 Livorno (IT)
(74) Representative: D'Angelo, Fabio

(56) References cited:
- WO-A-94/22204
- DE-A1-102004 038 882
- US-A- 5 396 140
- US-A- 5 568 781
- US-A1- 2004 066 098

## Description

The present invention relates to an axial-flux electric motor provided with a high-efficiency cooling system.

Known to the art are axial-flux electric motors of the type comprising: a stator with axial symmetry, which is made of ferromagnetic material and supports a plurality of windings set at angular distances apart from one another about an axis of rotation of the motor; at least one rotor facing the stator and provided with a plurality of permanent magnets set at angular distances apart from one another and arranged approximately on a plane perpendicular to the axis of rotation; and a cooling system comprising an annular body set on an external side of the stator in such a way that the annular body surrounds, at least partially, the stator. Said annular body is provided with a system for circulation of a refrigerating fluid inside the body itself, which is used for removing the heat produced by operation of the motor and hence cooling the stator of the motor itself.

A motor of the type illustrated above is described in the U.S. patent application No. US2005-035672 entitled *"Cooling and handling of reaction torque for an axial flux motor",* which illustrates precisely an axial-flux motor in which a single internal channel with a rectangular cross section designed to convey a cooling liquid is provided on an annular body that is coupled to the stator.

The cooling system described in the U.S. patent application No. US2005-035672 has been devised for an application of an on-land type and is not suitable for use in the marine field (in particular, in underwater applications), an environment in which sea water at high pressure is moreover used as cooling liquid.

WO 94/22204 A1 is considered to represent the closest prior art and discloses/

An axial-flux electric motor, comprising:
- a stator, provided with at least one portion made of ferromagnetic material, which supports a plurality of windings set at angular distances apart from one another about an axis of rotation of the motor;
- at least one rotor facing the stator and said rotor being provided with a plurality of permanent magnets set at angular distances apart from one another and arranged approximately on a plane perpendicular to said axis of rotation; and
- a cooling system comprising a body coupled to the stator and provided with at least one system for circulation of a fluid inside the body itself, said circulation system comprising at least one tube with circular cross section, which forms at least one turn that extends inside said body, wherein said tube is completely enclosed in the material of which the body itself is made.

The aim of the present invention is to make available an axial-flux electric motor provided with a cooling system that will enable a high efficiency and can be used with sea water at high pressure.

The above aim is achieved by the present invention by providing an axial-flux electric motor comprising:
- a stator (7), provided with at least one portion made of ferromagnetic material, which supports a plurality of windings (9) set at angular distances apart from one another about an axis of rotation (11) of the motor;
- at least one rotor (13) facing the stator (7) and said rotor (13) being provided with a plurality of permanent magnets (15) set at angular distances apart from one another and arranged approximately on a plane perpendicular to said axis of rotation (11); and
- a cooling system (20) comprising a body (22) coupled to the stator (7) and provided with at least one system for circulation of a fluid inside the body itself,

The invention will now be described with reference to the attached drawings, which illustrates a preferred non-limiting embodiment thereof and in which:
- Figure 1 illustrates, in a longitudinal section, an engine propulsive assembly of an underwater means using a pair of motors each according to the teachings of the present invention;
- Figure 2 is a schematic illustration, at a reduced scale, of an underwater means on which the motor according to the present invention can be used; and
- Figure 3 is a perspective view of a first item of the said circulation system comprising at least one tube (30) made of a material resistant to corrosion caused by sea water and said tube (30) a circular cross section, which forms a coil comprising either three or four turns that extend inside said body (22), wherein said tube (30) is completely enclosed in the material of which the body (22) itself is made;
   said coil has a fluid inlet (30a) and a fluid outlet (30b);
   the motor further comprising a sea chest (40) communicating with said fluid inlet (30a) and said sea dest (40) being used for sucking by the dynamic effect, sea water towards said fluid inlet (30a), motor;
- Figure 4 illustrates a detail of Figure 3; and
- Figure 5 is a cross-sectional view of a second item of the motor.

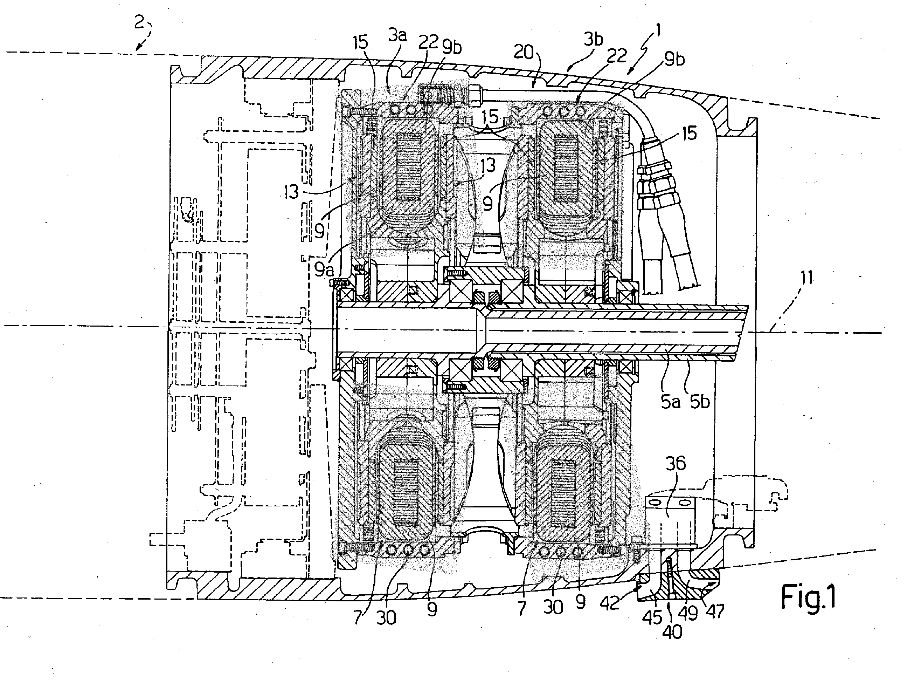

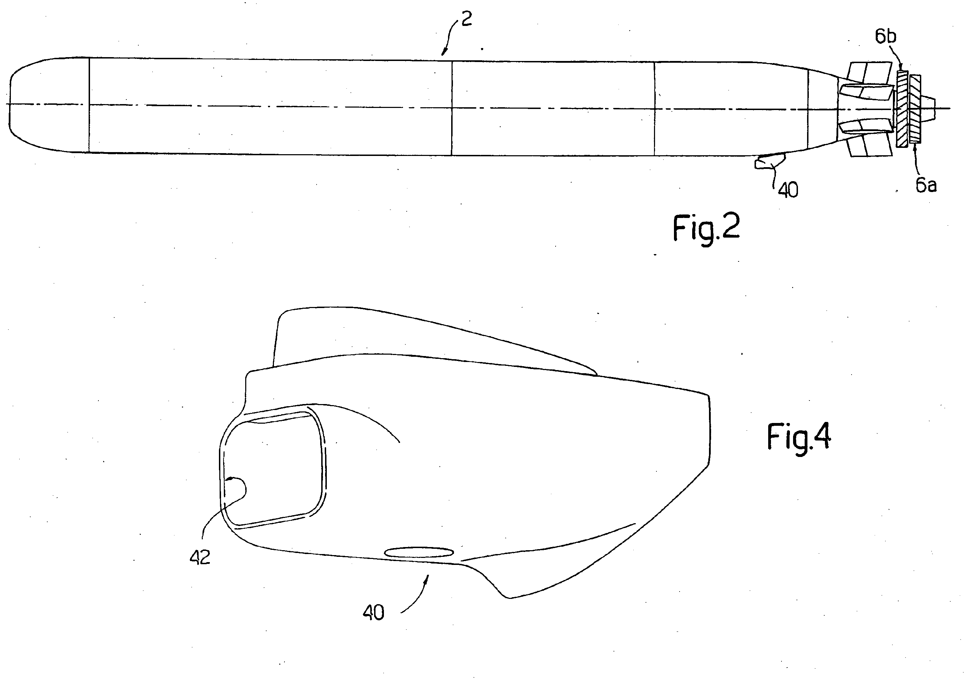

Designated as a whole by 1 in Figure 1 is a propulsive assembly for underwater means, in particular a torpedo 2 (Figure 2) or else a submarine (not illustrated), comprising a first axial-flux electric motor 3a and a second axial-flux electric motor 3b, which are designed to enable rotation of a first output shaft 5a and a second output shaft 5b, respectively, which are coaxial to one another and carry, at one end thereof, respective counter-rotating propellers 6a, 6b (Figure 2).

In the example of embodiment illustrated in Figure 2, the motors 3a, 3b are housed inside the tubular structure of the torpedo 2 and are set in a rear portion of the torpedo itself.

The electric motors 3a, 3b could, in applications different from the one illustrated, also be used individually, i.e., providing a propulsive assembly comprising a single motor 3a, 3b. For example, the use of just one motor 3a, 3b may be hypothesized for the propulsion of a generic marine means, for example a motorboat.

The motors 3a, 3b consequently have the same electromechanical structure. For this reason, in the sequel of the description, reference will be made, for reasons of simplicity, to an electric motor 3, without making any distinction between the motor 3a and the motor 3b.

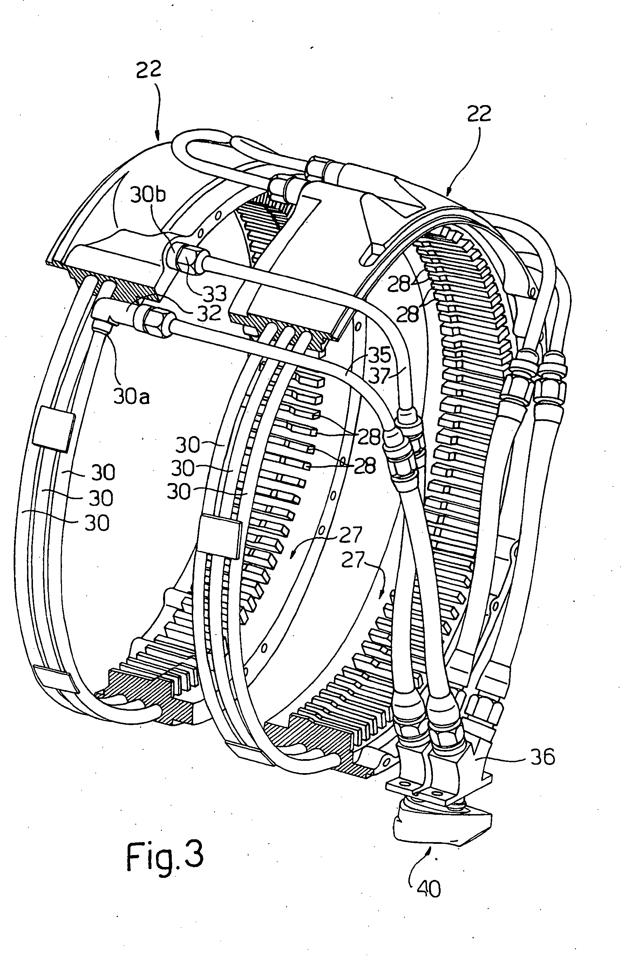

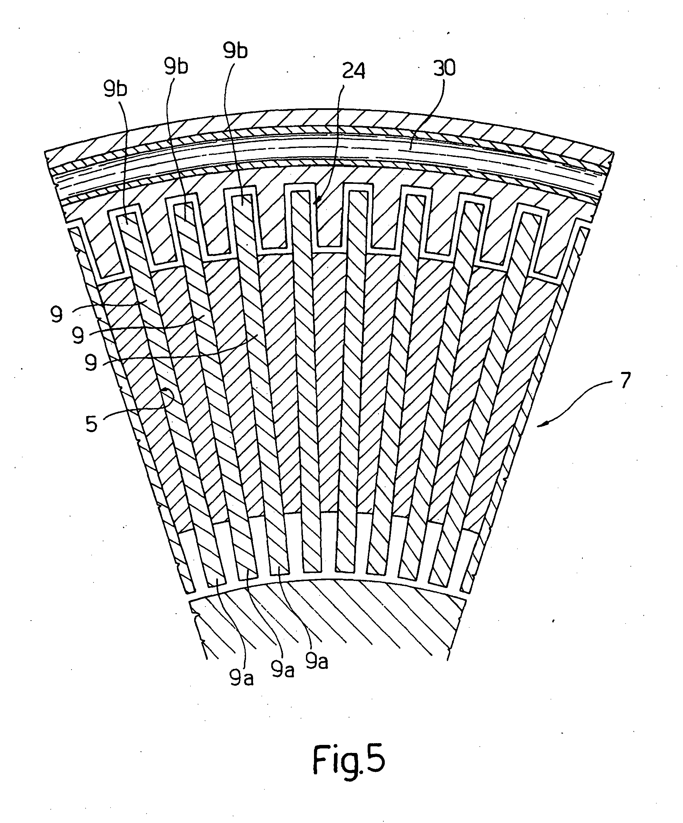

In particular, the motor 3 comprises:
- a stator 7 made of a ferromagnetic material, with axis 11, which supports a plurality of electrical windings 9 (see also Figure 5) set at angular distances apart from one another about the axis 11, which corresponds to the axis of rotation of the output shaft 5 of the motor 3;
- a pair of disk-shaped rotors 13, set on opposite sides of the stator 7 and stably connected to the output shaft 5a, 5b - each disk-shaped rotor 13 facing a side of the stator and being provided with a plurality of permanent magnets 15 having a plane shape, which are set at angular distances apart from one another and are arranged approximately on a plane perpendicular to the axis of rotation 11; and
- a cooling system 20, comprising an annular tubular body 22 (Figure 3), which shares the axis 11 and is coupled to an external side of the stator 7 in such a way that the annular tubular body 22 surrounds the stator; as will be better illustrated hereinafter, the annular tubular body 22 is provided internally with a system for circulation of a cooling fluid.

In greater detail, the stator 7 has a toroidal shape with a rectangular cross section and is formed by a plurality of laminations (not illustrated) made of ferromagnetic material, which are set on top of one another according to a pack structure. The stator 7 is provided with first grooves S (Figure 5), which extend in a radial direction on a first face of the stator 7 and are angularly spaced at equal distances apart from one another about the axis 11, and second grooves (not illustrated), which extend in a radial direction on a second face of the stator 7 opposite to the first having the same angular arrangement.

A pair of grooves arranged on opposite sides of the stator 7 and having the same angular position houses opposite portions of a winding 9, which (Figure 1) surrounds the internal portion of the stator (having a rectangular cross section) and has a cross section shaped like a rectangular frame (Figure 1) .

In this way, a first portion 9a of each winding 9 extends inside the stator 7 towards the axis 11 in the radial direction, whilst a second portion 9b of the winding 9 extends outside the stator once again in the radial direction. Between two second portions 9b adjacent to one another a gap 24 (Figure 5) is provided, the function of which will be clarified hereinafter.

In greater detail (Figure 3), the body 22 has a tubular shape with a substantially rectangular cross section and is delimited, amongst other things, by a cylindrical wall 27 facing the axis 11. The body 22 comprises a plurality of short radial appendages 28 of an approximately parallelepipedal shape, which extend from the wall 27 towards the axis 11.

Each appendage 28 is designed to set itself in a respective gap 24, engaging it totally (Figure 5) in such a way that each appendage 28 is set, in use, in contact between facing portions of two windings 9 adjacent to one another, possibly with the use of a product that is good conductor of heat. In this way, the number of radial appendages 28 corresponds to the number of gaps 24 so as to provide an intimate mechanical and thermal contact between the body 22 and the stator 7.

The body 22 is made of a metal casting (for example, an aluminium casting), enclosed inside which is a steel tube 30 with circular cross section (Figure 1), shaped in such a way that this will provide a coil comprising three or four circular turns, which share the axis 11 and are linearly spaced at equal distances apart from one another along the axis 11. The steel tube can be conveniently made of the material AISI 316L, which can be easily welded and connected.

The turns are thus completely englobed in the metal material of which the body 22 itself is made.

The tube 30 can present, for example, an external diameter of 10 mm and an internal diameter of 8 mm. The tube 30 could also be made of a material other than steel (for example, an aluminium casting), provided that this has a high resistance to corrosion caused by sea water.

The steel tube 30, and hence the coil, has a first end portion 30a (Figure 3) connected with a fitting 32, which extends, for a stretch thereof, outside the body 22 and forms an inlet for cooling fluid. The steel tube 30, and hence the coil, moreover has a second end portion 30b (Figure 3) connected to a fitting 33, which extends, for a stretch thereof, outside the body 22 and forms an outlet for cooling fluid.

The fitting 32 is connected to a fluid-supply pipe 35, which extends from a wye connector 36, whilst the fitting 33 is connected to a fluid-outlet pipe 37, which extends from the wye connector 36.

The wye connector 36 is in turn connected to a sea chest 40, which is mounted on the outside of the torpedo 2 in the proximity of a terminal portion (motor section, Figure 2) of the torpedo itself. Said arrangement enables the flow of water that runs along the walls of the torpedo not to be sensibly perturbed.

Alternatively, the sea chest 40 could also be mounted on the bottom fixed tail assembly.

The sea chest 40 has a front opening 42 having a rectangular shape (Figure 4) with chamfered angles, which communicates with a front internal chamber 45, at the bottom of which an opening is made, which communicates with a conduit that extends through the wye connector 36 giving out into the fluid-supply pipe 35.

The sea chest 40 moreover has a rear opening 47, which is set on the opposite side with respect to the front opening 42 and communicates with a rear internal chamber 49, at the bottom of which an opening is made communicating with a conduit that extends through the wye connector 36 giving out into the fluid-outlet pipe 37.

In use, following upon activation (obtained by means of procedures that are known and are consequently not described in further detail) of the propulsive assembly 1, the torpedo 2 moves in the sea water under the thrust of its two counter-rotating propellers 6a, 6b. The torpedo 2 can thus reach a high cruising speed.

Following upon advance of the torpedo 2, on account of the dynamic effect a difference in pressure ΔP is created between the front internal chamber 45 and the rear one 49 in such a way that the sea water flowing through the supply pipe 35 is taken in and fed to the inlet of the coil where it can lap the annular body 22 concurring in lowering the temperature of the body 22 and of the stator 7, which is mechanically and thermally connected thereto. The cooling fluid is consequently the sea water that flows in the coil. At the end of the coil, the sea water is fed to the fluid-outlet pipe 37, from which it is sent back into the sea through the sea chest 40.

The motor according to the present invention presents a plurality of advantages, amongst which the following may be listed:
- the cooling system 20 carries out removal of the heat produced by the motor with high efficiency, with a limited thermal jump between the stator 7 and the sea water - in this way, the motor can provide an efficiency higher than 90% for any r.p.m.;
- the cooling system 20 enables achievement and maintenance of the requirements of performance of the motor 3 throughout the duration of the mission of the torpedo 2;
- the cooling system illustrated can operate at great depths, for example in a range of pressures comprised between 0.2 bar and 120 bar (corresponding to a depth of use of the underwater means of between 2 m and 1200 m) in so far as the tube 30, thanks to its particular cross section and on account of its arrangement in the metal, is able to withstand high pressures;
- thanks to the use of materials not sensitive to sea water, the cooling system 20 enables the torpedo 2 in the launching tube to be kept in contact with the sea water for an extremely long time (e.g., three months).

## Claims

1. An axial-flux electric motor, comprising:
- a stator (7), provided with at least one portion made of ferromagnetic material, which supports a plurality of windings (9) set at angular distances apart from one another about an axis of rotation (11) of the motor;
- at least one rotor (13) facing the stator (7) and said rotor (13) being provided with a plurality of permanent magnets (15) set at angular distances apart from one another and arranged approximately on a plane perpendicular to said axis of rotation (11); and
- a cooling system (20) comprising a body (22) coupled to the stator (7) and provided with at least one system for circulation of a fluid inside the body itself,
said circulation system comprising at least one tube (30) made of a material resistant to corrosion caused by sea water and said tube (30) having a circular cross section, which forms a coil comprising either three or four turns that extend inside said body (22), wherein said tube (30) at is completely enclosed in the material of which the body (22) itself is made;
said coil has a fluid inlet (30a) and a fluid outlet (30b);
the motor further comprising a sea chest (40) communicating with said fluid inlet 30a and said sea chest (40) being used for sucking, by the dynamic effect, sea water towards said fluid inlet (30a).

2. The electric motor according to Claim 1, in which said tube (30) forms a number of circular turns, which share said axis (11) and are linearly set apart from one another along the axis itself (11).

3. The electric motor according to Claim 1, in which said tube (30) is made of stainless steel.

4. The electric motor according to any one of the preceding claims, in which said body (22) is made of a metal material.

5. The electric motor according to Claim 4, in which said body (22) is obtained from a metal casting, inside which said tube (30) is enclosed.

6. The electric motor according to any one of the preceding claims, in which said body (22) is set on an external side of said stator (7) so that the body (22) surrounds said stator at least partially.

7. The electric motor according to any one of the preceding claims, in which said body (22) has an annular tubular shape and is provided, on an internal wall thereof (27) facing said axis (11), with a plurality of radial appendages (28); each radial appendage (28) being set, in use, between facing portions of two adjacent windings (9) of said stator.

8. The motor according to Claim 1, in which said fluid outlet (30b) communicates with said sea chest (40) for discharging said sea water.

9. The motor according to Claim 1, in which said sea chest (40) has a front opening (42) which communicates with said fluid inlet of said coil; the sea chest (40) further having a rear opening (47), which is set on the opposite side with respect to the first opening and communicates with said fluid outlet of said coil.

10. The motor according to Claim 9, in which said front opening (42) has a rectangular shape with chamfered angles.

## Patentansprüche

1. Ein Axialfluss-Elektromotor, mit:
- einem mit mindestens ein Abschnitt aus ferroelektrischem Material versehenen Stator (7), der eine Vielzahl von Wicklungen (9) trägt, die in Winkelabständen um eine Drehachse (11) des Motors voneinander beabstandet angeordnet sind;
- mindestens einem Rotor (13), der dem Stator (7) gegenüberliegt und der mit einer Vielzahl von Permanentmagneten (15) versehen ist, die in Winkelabständen voneinander beabstandet und ungefähr in einer Ebene senkrecht zur Drehachse (11) angeordnet sind; und
- einem Kühlsystem (20) mit einem Körper (22), der mit dem Stator (7) verbunden ist und mit mindestens einem System zum Zirkulierten einer Flüssigkeit innerhalb des Körpers versehen ist,
- das Zirkulationssystem umfasst mindestens ein Rohr (30) aus einem gegen Meerwasser korrosionsbeständigen Material, das einen kreisförmigen Querschnitt aufweist, das Rohr (30) bildet eine Wendel mit entweder 3 oder 4 Windungen aus, die sich in den Körper (22) erstrecken, wobei das Rohr (30) vollständig von dem Material umschlossen ist, aus dem der Körper (22) besteht;
- die Wendel weist einen Flüssigkeitseinlass (30a) und einen Flüssigkeitsauslass (30b) auf;
- der Motor weist ferner einen Meerkasten (40) auf, der mit dem Flüssigkeitseinlass (30a) in Verbindung steht, und der Meerkasten (40) dient zum Ansaugen von Meerwasser in Richtung des Flüssigkeitseinlasses (30a) durch den dynamischen Effekt.

2. Elektromotor nach Anspruch 1, wobei das Rohr (30) eine Anzahl von kreisförmigen Windungen ausbildet, die sich die Achse (11) teilen und entlang der Achse (11) linear voneinander beabstandet angeordnet sind.

3. Elektromotor nach Anspruch 1, wobei das Rohr (30) aus Edelstahl besteht.

4. Elektromotor nach einem der vorstehenden Ansprüche, wobei der Körper (22) aus einem Metallmaterial besteht.

5. Elektromotor nach Anspruch 4, wobei der Körper (22) aus einem Metallguss erhalten wird, in dem das Rohr (30) eingeschlossen ist.

6. Elektromotor nach einem der vorstehenden Ansprüche, wobei der Körper (22) auf eine äußeren Seite des Stators (7) gesetzt ist, so dass der Körper (22) den Stator zumindest teilweise umgibt.

7. Elektromotor nach einem der vorstehenden Ansprüche, wobei der Körper (22) eine ringförmige Rohrform aufweist und auf seiner der Achse (11) gegenüberliegenden Innenwand mit einer Vielzahl von radialen Fortsätzen (28) versehen ist; jeder radiale Fortsatz (28) ist bei Verwendung zwischen gegenüberliegenden Abschnitten von zwei benachbarten Wicklungen (9) des Stators angeordnet.

8. Motor nach Anspruch 1, wobei der Flüssigkeitsauslass (30b) mit dem Meerkasten (40) zum Auslassen des Meerwassers in Verbindung steht.

9. Motor nach Anspruch 1, wobei der Meerkasten (40) eine vordere Öffnung (42) aufweist, die mit dem Flüssigkeitseinlass der Wendel in Verbindung steht; der Meerkasten (40) ferner eine hintere Öffnung (47) aufweist, die bezogen auf die erste Öffnung auf der gegenüberliegenden Seite angeordnet ist und mit dem Flüssigkeitsauslass der Wendel in Verbindung steht.

10. Motor nach Anspruch 9, wobei die vordere Öffnung (42) eine rechteckige Form mit abgeschrägtes Ecken aufweiset.

## Revendications

1. Moteur électrique à flux axial, comprenant :
- un stator (7), muni d'au moins une partie réalisée en un matériau ferromagnétique, qui supporte une pluralité d'enroulements (9) fixés à des distances angulaires de manière à être espacés les uns des autres autour d'un axe de rotation (11) du moteur ;
- au moins un rotor (13) faisant face au stator (7) et ledit rotor (13) étant muni d'une pluralité d'aimants permanents (15) fixés à des distances angulaires de manière à être espacés les uns des autres et agencés approximativement sur un plan perpendiculaire audit axe de rotation (11) ; et
- un système de refroidissement (20) comprenant un corps (22) couplé au stator (7) et muni d'au moins un système pour la circulation d'un fluide à l'intérieur du corps lui-même,
ledit système de circulation comprenant au moins un tube (30) réalisé en un matériau résistant à la corrosion provoquée par l'eau de mer et ledit tube (30) ayant une section transversale circulaire, qui forme une bobine comprenant trois ou quatre spires qui s'étendent à l'intérieur dudit corps (22), où ledit tube (30) est complètement enfermé dans le matériau dont le corps (22) lui-même est formé ;
ladite bobine ayant une entrée de fluide (30a) et une sortie de fluide (30b) ;
le moteur comprenant en outre une prise d'eau à la mer (40) communiquant avec ladite entrée de fluide (30a) et ladite prise d'eau à la mer (40) étant utilisée pour aspirer, par l'effet dynamique, l'eau de mer vers ladite entrée de fluide (30a).

2. Moteur électrique selon la revendication 1, dans lequel ledit tube (30) forme un certain nombre de spires circulaires, qui partagent ledit axe (11) et qui sont fixées linéairement de manière à être espacées les unes des autres le long de l'axe (11) lui-même.

3. Moteur électrique selon la revendication 1, dans lequel ledit tube (30) est réalisé en acier inoxydable.

4. Moteur électrique selon l'une quelconque des revendications précédentes, dans lequel ledit corps (22) est réalisé en un matériau métallique.

5. Moteur électrique selon la revendication 4, dans lequel ledit corps (22) est obtenu à partir d'une pièce moulée métallique, à l'intérieur de laquelle ledit tube (30) est enfermé.

6. Moteur électrique selon l'une quelconque des revendications précédentes, dans lequel ledit corps (22) est fixé sur un côté externe dudit stator (7) de manière à ce que le corps (22) entoure ledit stator au moins partiellement.

7. Moteur électrique selon l'une quelconque des revendications précédentes, dans lequel ledit corps (22) a une forme tubulaire annulaire et est muni, sur sa paroi interne (27) faisant face audit axe (11), d'une pluralité d'appendices radiaux (28) ; chaque appendice radial (28) étant fixé, lors de l'utilisation, entre des parties opposées de deux enroulements adjacents (9) dudit stator.

8. Moteur selon la revendication 1, dans lequel ladite sortie de fluide (30b) communique avec ladite prise d'eau à la mer (40) pour décharger ladite eau de mer.

9. Moteur selon la revendication 1, dans lequel ladite prise d'eau à la mer (40) comporte une ouverture avant (42) qui communique avec ladite entrée de fluide de ladite bobine ; la prise d'eau à la mer (40) ayant en outre une ouverture arrière (47), qui est fixée sur le côté opposé par rapport à la première ouverture et qui communique avec ladite sortie de fluide de ladite bobine.

10. Moteur selon la revendication 9, dans lequel ladite ouverture avant (42) a une forme rectangulaire avec des angles chanfreinés.
